# EUROPEAN PATENT APPLICATION

(11) **EP 4 431 474 A1**
(43) Date of publication of application: **18.09.2024**
(21) Application number: 23161692.1
(22) Date of filing: 14.03.2023
(51) Int. Cl.: C03C 1/00, C03B 1/00, C03C 3/087

(54) **GLASS BATCH COMPOSITIONS COMPRISING SAND BLENDS AND METHODS OF FORMING GLASS WITH SAND BLENDS**

(71) Applicant: ANKERPOORT N.V., 6223 EP Maastricht (NL)
(72) Inventor: VAN LIMPT, Johannes, 6223 EP Maastricht (NL); BEYERS, Lesley, 6223 EP Maastricht (NL)
(74) Representative: Forresters IP LLP

(57) **Abstract**

The present invention relates to sand blends. The present invention also relates to glass batch compositions comprising sand blends. The present invention also relates to methods of forming glass with the glass batch compositions.

## Description

### FIELD OF THE INVENTION

The present invention relates to sand blends. The present invention also relates to glass batch compositions comprising sand blends. The present invention also relates to methods of forming glass with the glass batch compositions.

### BACKGROUND OF THE INVENTION

Glass is an amorphous, non-crystalline, solid material. Glasses are typically brittle and often optically transparent. A glass is defined as an inorganic product of fusion which has been cooled through its glass transition to the solid state without crystallising. The main component of most glasses, in general use, is silica (SiO₂).

Pure silica has a relatively high glass melting point of over 2300°C. Pure silica can be made into glass for special applications. However, it is common to add substances to common glass to simplify processing. One component added to silica in a glass is sodium carbonate (Na₂CO₃) which lowers the melting point to about 1500°C. However, sodium carbonate makes glass water soluble, which is usually undesirable, so lime (calcium oxide, CaO) is often added, to provide a better chemical durability. Some magnesium oxide (MgO) and/or aluminium oxide (Al₂O₃) is/are sometimes added, also to provide a better chemical durability. Many glasses have other ingredients added to change their properties, depending on their intended function.

Common glass is generally produced in a two step process, and then shaped to make it suitable for a variety of applications.

The first step is batch mixing. The mixture of ingredients to make up the glass (typically, silica, sodium carbonate, calcium carbonate and recycled glass, together with small quantities of various other trace ingredients) are mixed, to ensure an even mix of ingredients, and fed into the furnace.

In the second step, the mixture is heated to around 1450°C, where the ingredients melt, various chemical reactions take place and CO₂ and SO₃ are evolved. These chemical reactions form molten glass (or, 'glass solution') which can be moulded and cooled.

The most common furnace used for manufacturing glass solution is a continuous regenerative type, with either the side or the end ports connecting brick checkers to the inside of the melter. Checkers conserve fuel by acting as heat exchangers; the fuel combustion products heat incoming combustion air. The molten glass is refined (heat conditioning) and is then pressed, blown, drawn, rolled or floated, depending on the final product.

Silica can be provided to glass furnaces in the form of silica sand. Different types of silica sand typically are not blended before being added to a glass melt.

### SUMMARY OF THE INVENTION

The present invention relates to blends of sands which, after melting, form into beneficial glass.

The present invention relates to the combination of quartz sand and cristobalite in glass batches. By combining quartz sand and cristobalite in glass batches, in particular ratios, the present inventors surprisingly discovered that beneficial glass can be produced whilst minimising the energy needed to form the glass (compared to other glass batches).

The present invention is as set out in the following clauses:
1. A glass batch composition comprising:
   quartz sand; and,
   cristobalite,
   wherein the glass batch composition has a weight ratio of quartz sand to cristobalite of from 3:1 to 1:3.
2. The glass batch composition of clause 1, wherein the glass batch composition has a weight ratio of quartz sand to cristobalite of: from 2.75:1 to 1:2.75; or, from 2.5:1 to 1:2.5; or, from 2.25:1 to 1:2.25; or, from 2:1 to 1:2.
3. The glass batch composition of clause 1 or clause 2,
   wherein the glass batch composition comprises from 10 to 75 weight % quartz sand; and/or,
   wherein the glass batch composition comprises from 10 to 75 weight % cristobalite.
4. The glass batch composition of any one of clauses 1 to 3, wherein the quartz sand and the cristobalite make up from 10 to 70 weight % of the glass batch composition.
5. The glass batch composition of any one of clauses 1 to 4, wherein the quartz sand and the cristobalite are mixed.
6. The glass batch composition of any one of clauses 1 to 5, wherein the glass batch is a loose batch.
7. The glass batch composition of any one of clauses 1 to 6, wherein the glass batch composition comprises:
   from 10 weight % to 70 weight % cristobalite; or,
   from 10 weight % to 45 weight % cristobalite.
8. The glass batch composition of any one of clauses 1 to 7, wherein the glass batch composition comprises:
   10.5 weight % cristobalite, plus or minus 5 weight %; or,
   21.2 weight % cristobalite, plus or minus 5 weight %; or,
   40.1 weight % cristobalite, plus or minus 5 weight %.
9. The glass batch composition of any one of clauses 1 to 8, wherein the cristobalite:
   has a particle size distribution with a minimum particle size of 63 µm and a maximum particle size of 1000 µm; or,
   has a particle size distribution with a maximum particle size of 45 µm; or,
   has a particle size distribution with a maximum particle size of 100 µm; or,
   has a particle size distribution with a maximum particle size of 200 µm.
10. The glass batch composition of any one of clauses 1 to 9, wherein the quartz sand:
   has a particle size distribution with a minimum particle size of 63 µm and a maximum particle size of 1000 µm; or,
   has a particle size distribution with a maximum particle size of 50 µm.
11. The glass batch composition of any one of clauses 1 to 10, wherein the glass batch composition is for forming a container glass, float glass, borosilicate glass, glass fiber, fiber glass or glass wool.
12. The glass batch composition of any one of clauses 1 to 11, wherein the quartz sand comprises, or consists of, quartz M32 (from Sibelco^{®}) or quartz M300 (from Sibelco^{®}) or quartz M400 (from Sibelco^{®}) or quartz F32 (from Quarzwerke) or Sikron SF300 (from Quarzwerke).
13. The glass batch composition of any one of clauses 1 to 12, wherein the cristobalite comprises, or consists of, SIBELITE^{®} M72 (from Sibelco^{®}) or SIBELITE^{®} M72T (from Sibelco^{®}) or SIBELITE^{®} M0010 (from Sibelco^{®}) or SIBELITE^{®} M3000 (from Sibelco^{®}) or Sikron SF3000 (from Quarzwerke).
14. The glass batch composition of any one of clauses 1 to 13, wherein the glass batch composition further comprises one or more of:
   cullet, soda ash, limestone, lime, dolomite, feldspar, nepheline syenite, nepheline, kaolin, anorthosite, boric acid, colemanite, sodium sulfate and/or borax.
15. The glass batch composition of any one of clauses 1 to 14, wherein the glass batch composition comprises:
   from 1 weight % to 58 weight % quartz sand; and/or,
   from 1 weight % to 58 weight % cristobalite; and/or,
   from 0 weight % to 98 weight % cullet.
16. A method of forming glass, the method comprising:
   introducing the glass batch composition of any one of clauses 1 to 15 into a glass furnace;
   heating the glass batch composition to produce a glass solution; and,
   cooling the glass solution to make a glass.
17. The method of clause 16, wherein the glass produced is a float glass comprising:
   from 67 weight % to 77 weight % SiO₂; and,
   from 10 weight % to 20 weight % Na₂O; and,
   from 3 weight % to 15 weight % CaO; wherein the balance is:
      from 0 weight % to 8 weight % MgO; and/or,
      from 0 weight % to 5 weight % Al₂O₃; and/or,
      from 0 weight % to 5 weight % K₂O; and/or,
   and optionally other minor elements.
18. The method of clause 16, wherein the glass produced is a fiber glass comprising:
   from 52 weight % to 62 weight % SiO₂; and,
   from 12 weight % to 17 weight % Al₂O₃; and,
   from 14 weight % to 25 weight % CaO; wherein the balance is:
      from 0 weight % to 9 weight % MgO; and/or,
      from 0 weight % to 13 weight % B₂O₃; and/or,
      from 0 weight % to 3 weight % Na₂O; and/or,
   and optionally other minor elements.
19. Use of a glass batch composition according to any one of clauses 1 to 15, to form a float glass comprising:
   from 67 weight % to 77 weight % SiO₂; and,
   from 10 weight % to 20 weight % Na₂O; and,
   from 3 weight % to 15 weight % CaO; wherein the balance is:
      from 0 weight % to 8 weight % MgO; and/or,
      from 0 weight % to 5 weight % Al₂O₃; and/or,
      from 0 weight % to 5 weight % K₂O; and/or,
   and optionally other minor elements.
20. Use of a glass batch composition according to any one of clauses 1 to 15, to form a fiber glass comprising:
   from 52 weight % to 62 weight % SiO₂; and,
   from 12 weight % to 17 weight % Al₂O₃; and,
   from 14 weight % to 25 weight % CaO; wherein the balance is:
      from 0 weight % to 9 weight % MgO; and/or,
      from 0 weight % to 13 weight % B₂O₃; and/or,
      from 0 weight % to 3 weight % Na₂O; and/or,
   and optionally other minor elements.

### BRIEF DESCRIPTION OF THE FIGURES

Embodiments of the invention are described below with reference to the accompanying drawings. The accompanying drawings illustrate various embodiments of systems, methods, and embodiments of various other aspects of the disclosure. Any person with ordinary skills in the art will appreciate that the illustrated element boundaries (e.g., boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another and vice versa. Furthermore, elements may not be drawn to scale. Non-limiting and non-exhaustive descriptions are described with reference to the following drawings. The components in the figures are not necessarily to scale, emphasis instead being placed upon illustrating principles.
Figure 1 shows cross section images of different glasses formed from glass batch compositions including varying ratios of quartz sand M32 and cristobalite M72T, using a first glass method.
Figure 2 shows magnified images of the glass cross sections of Figure 1.
Figure 3 shows top view images of different glasses formed from glass batch compositions including varying ratios of quartz sand M32 and cristobalite grit M72T, using a third glass method.

### DETAILED DESCRIPTION OF THE INVENTION

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present disclosure, the preferred systems and methods are now described.

Embodiments of the present disclosure will be described more fully hereinafter with reference to the accompanying drawings in which like numerals represent like elements throughout the several figures, and in which example embodiments are shown. Embodiments of the claims may, however, be embodied in many different forms and should not be construed as limited to the embodiments set forth herein. The examples set forth herein are non-limiting examples and are merely examples among other possible examples.

Some of the terms used to describe the present invention are set out below:
"Cristobalite" refers to a mineral that is a high-temperature polymorph of quartz. One example of cristobalite is cristobalite grit SIBELITE^{®} M72T (from Sibelco^{®}).
Cristobalite grit M72T is industrially produced. Cristobalite grit M72T is commonly used as a starting material for engineering stone and paint applications. Cristobalite grit M72T is referred to as a grit because it has a particle size distribution with a minimum particle size of 100 µm and a maximum particle size of 500 µm. Another example of cristobalite is cristobalite flour SIBELITE^{®} M3000 (from Sibelco^{®}).
Cristobalite flour M3000 is referred to as a flour because it has a particle size distribution with a maximum particle size of 45 µm.
"Cullet" refers to broken and/or ground waste glass. Cullet can be separated into different waste streams, depending on particle size and/or contamination. Cullet can be contaminated with organic material, metals and/or ceramic pieces. Cullet does not include cristobalite and/or quartz.
"Glass" is an amorphous, non-crystalline, solid material. Glasses are typically brittle and often optically transparent. A glass is defined as an inorganic product of fusion which has been cooled through its glass transition to the solid state without crystallising. The main component of most glasses, in general use, is silica (SiO₂). Common glass is generally produced in a two step process, and then shaped to make it suitable for a variety of applications. The first step is batch mixing. The mixture of ingredients to make up the glass (typically at least, silica, sodium carbonate, calcium carbonate and recycled glass (in the form of cullet), together with small quantities of various other trace ingredients) are mixed, to ensure an even mix of ingredients, and fed into the furnace. In the second step, the mixture is heated to around 1,500 °C, where the ingredients melt, various chemical reactions take place and CO₂ and SO₂ are evolved. These chemical reactions form molten glass (or, "glass solution") which can be moulded and cooled.
"Glass batch" or "Glass batch composition" refers to a mixture of ingredients intended to form a glass melt. A glass batch for forming a soda lime glass comprises silica sand, soda ash and limestone (along with other, optional, components). These components of a glass batch can be combined from separate raw materials or can be supplied pre-mixed.
"LOI" refers to loss on ignition. This measurement is conducted by strongly heating a sample of the mineral at a specified temperature and allowing any volatile substances to escape. This will continue until the mass of the mineral stops changing. The value of LOI represents the mass of volatile material present in a sample, after an initial 1 hour drying step at 105 °C.
"Quartz" refers to a chemical compound consisting of one part silicon to two parts oxygen (SiO₂). One example of quartz is quartz sand M32 (from Sibelco^{®}). Quartz sand M32 refers to a silica sand which is industrially produced. Quartz sand M32 is referred to as a quartz sand because it has a particle size distribution with a minimum particle size of 63 µm and a maximum particle size of 1000 µm. The mineral is commonly used as a starting material for the glass, crystal or ceramic industries as a source of silica in foundries, tile glues, plasters, mortars or coatings. Another example of quartz is quartz flour M300 (from Sibelco^{®}). Quartz flour M300 is referred to as a flour because it has a particle size distribution with a maximum particle size of 50 µm.
"Unavoidable impurities" refers to components present in a composition which do not affect the properties of the composition. Unavoidable impurities are present in a composition at: less than 5 weight %; or, less than 4 weight %; or, less than 3 weight %; or, less than 2 weight %; or, less than 1 weight %; or less than 0.5 weight %; or less than 0.1 weight %.
"Weight %" refers to the percentage weight in grams of a component of a composition in every 100 grams of a composition. For example, if a glass batch composition contains quartz sand M32 at 25 weight %, then there is 25 g of quartz sand M32 for every 100 g of the glass batch composition.

### Examples

The following are non-limiting examples that discuss, with reference to tables and figures, the advantages of the glass batch compositions of the present invention.

### Example 1: Glass batch composition GBC1 and GBC2 including a mixture of quartz sand and cristobalite

In this non-limiting example, the example glass batch composition GBC1 and GBC2, and reference glass batch compositions R1 and R2 (comparative examples), were formed from a mixture of at most seven starting materials, namely, quartz sand M32, cristobalite grit M72T, glass-grade soda ash, glass-grade limestone, Durcal low-iron dolomite (0-3 mm), nepheline syenite (Matrix 350) and glass-grade sodium sulfate.

The starting materials obtained from Sibelco^{®} were quartz sand M32, cristobalite grit M72T, nepheline syenite (Matrix 350) and Durcal low-iron dolomite (0-3 mm). The starting materials glass-grade soda ash, glass-grade limestone and glass-grade sodium sulfate were obtained from Stoelzle Oberglas GmbH.

The source of the starting materials for each of the reference example and example glass batch compositions remained the same throughout Example 1. The only difference between the glass batch compositions of Example 1 is the relative amounts of quartz sand M32 and cristobalite grit M72T.

Table 1 shows the relative amount of each starting material that made up each glass batch composition, along with the ratio of starting materials quartz sand M32 and cristobalite grit M72T, and the substitution rate of quartz sand M32 with cristobalite grit M72T.

**Table 1: The starting materials for reference glass batch compositions R1 and R2 and example glass batch compositions GBC1 and GBC2. The quartz sand M32 to cristobalite grit M72T ratio and the substitution rate of quartz sand M32 with cristobalite grit M72T are shown following the starting materials.**

| | **AMOUNT (grams)** | | | |
|---|---|---|---|---|
| **STARTING MATERIAL** | **R1** | **R2** | **GBC1** | **GBC2** |
| **QUARTZ SAND M32** | 353.88 | 290.37 | 226.86 | 113.24 |
| **CRISTOBALITE M72T** | 0 | 63.51 | 127.02 | 240.64 |
| **SODA ASH** | 112.2 | 112.2 | 112.2 | 112.2 |
| **LIMESTONE** | 22.8 | 22.8 | 22.8 | 22.8 |
| **DOLOMITE** | 96.9 | 96.9 | 96.9 | 96.9 |
| **NEPHELINE SYENITE (MATRIX 350)** | 12 | 12 | 12 | 12 |
| **SODIUM SULFATE** | 2.22 | 2.22 | 2.22 | 2.22 |
| | | | | |
| **QUARTZ SAND M32 : CRISTOBALITE M72T** | | 4.57 : 1.00 | 1.79 : 1.00 | 1.00 : 2.13 |
| **SUBSTUTION OF QUARTZ SAND M32 WITH CRISTOBALITE M72T (%)** | 0 | 18 | 36 | 68 |

With reference to Table 1, R1 (a reference container glass batch composition) comprised 59.0 wt. % quartz sand M32 and 0.0 wt. % cristobalite grit M72T.

With reference to Table 1, R2 (a reference glass batch composition) comprised 48.4 wt.% quartz sand M32 and 10.6 wt.% cristobalite M72T. In R2 there was a 18% substitution of quartz sand M32 with cristobalite grit M72T and the ratio of quartz sand M32 to cristobalite grit M72T was 4.57 : 1.00.

With reference to Table 1, GBC1 (an example glass batch composition) comprised 37.8 wt.% quartz sand M32 and 21.2 wt.% cristobalite grit M72T. In GBC1 there was a 36% substitution of quartz sand M32 with cristobalite grit M72T and the ratio of quartz sand M32 to cristobalite grit M72T was 1.79 : 1.00.

With reference to Table 1, GBC2 (an example glass batch composition) comprised 18.9 wt. % quartz sand M32 and 40.11 wt. % cristobalite grit M72T. In GBC2 there was a 68% substitution of quartz sand M32 with cristobalite grit M72T and the ratio of quartz sand M32 to cristobalite grit M72T was 1.00 : 2.13.

### Glasses formed using a first glass method and the glass batch compositions of Table 1

A glass was formed from each of the reference and example glass batch compositions from Table 1 using a first glass method (outlined below).

### First glass method:

1. A Nabertherm HFL 16/17-S melting furnace was pre-heated to 1350 °C.
2. A Carbolite HTF 18/10 annealing furnace was pre-heated to 580 °C.
3. The starting materials of a glass batch composition of Table 1 were mixed together then melted in an Imerys Aptasial MG (1.62 kg) ceramic crucible in the melting furnace at 1350 °C for two hours.
4. The ceramic crucible was removed from the melting furnace and placed in the annealing furnace, then left to cool to 580 °C. The ceramic crucible was then maintained at 580 °C for a further four hours, annealing the glass.
5. The glass was cooled to room temperature over a period of at least eight hours.
6. A portion of the cooled glass was cut from the centre of the crucible.

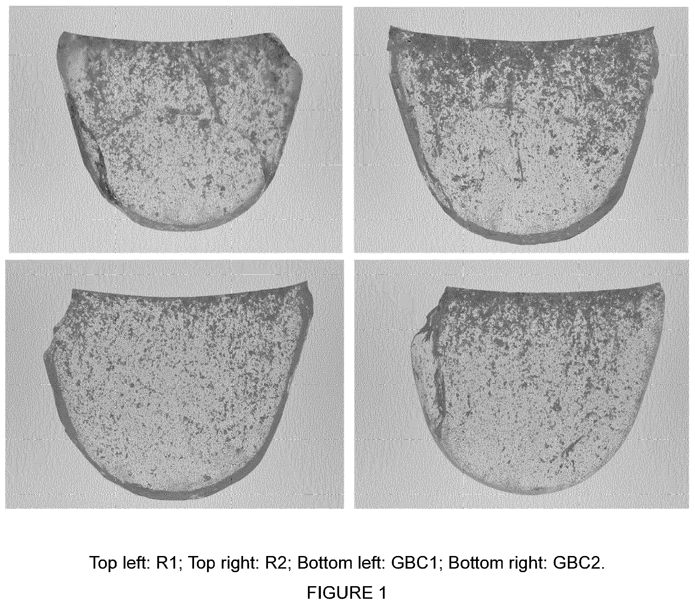

A cross section of each cooled glass portion was imaged using a digital camera (Canon EOS750D with an illumination set-up Kaiser ProliteBasic 2). The resulting images are shown in Figure 1.

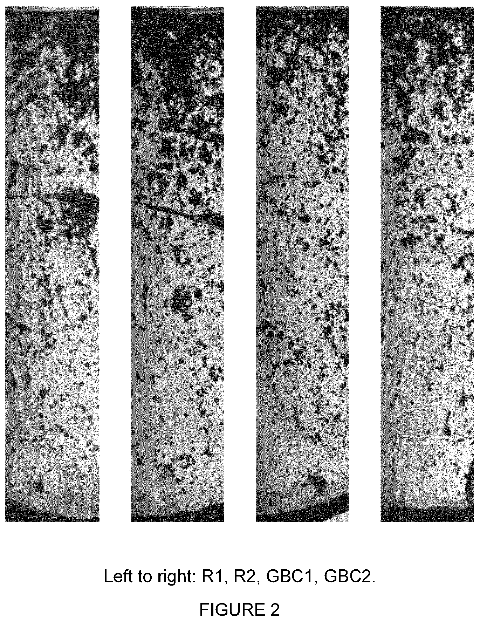

Each of the cross sections was also imaged using a microscope (Zeiss Discovery V12) in combination with a digital camera (Axiocam 305). The resulting images are shown in Figure 2.

Figure 1 and Figure 2 show that at ratios of starting materials quartz sand M32 to cristobalite grit M72T of 1.79 : 1.00 (GBC1) and 1.00 : 2.13 (GBC2), there was an improvement in primary melt quality compared to glasses obtained from the reference glass batch compositions. This is evidenced by a higher proportion of amorphous phase glass in the images for GBC1 (bottom left image, Fig. 1; second from right image, Fig. 2) and GBC2 (bottom right image, Fig. 1; right hand image, Fig. 2) than in any of the images for R1 or R2. Put differently, the example glass batch compositions show a higher conversion degree of starting materials to amorphous phase glass when compared to the reference glass batch compositions.

A higher conversion degree of glass batch materials to amorphous phase glass indicates a faster conversion rate. Therefore, the claimed ratio of quartz sand to cristobalite of from 3:1 to 1:3 reduces the minimal residence time required during the glass production process for a full conversion of a glass batch composition to a glass. Alternatively, if the residence time is not changed then the results shown in Figure 1 and Figure 2 indicate that a ratio of quartz sand to cristobalite of from 3:1 to 1:3 allows for a reduction in the glass furnace temperature required for a full conversion of the glass batch to a glass. Therefore, energy is saved when using the presently claimed glass batch compositions, compared to reference examples.

### Example 2: Further glass batch compositions including a mixture of quartz sand and cristobalite (GBC3, GBC4 and GBC5)

In this non-limiting example, the example glass batch compositions GBC3, GBC4 and GBC5, and reference glass batch compositions R3 and R4 (comparative examples), were formed from a mixture of at most nine starting materials, namely, quartz sand M32, cristobalite grit M72T, glass-grade soda ash, glass-grade limestone, Durcal low-iron dolomite (0-3 mm), nepheline syenite (Matrix 350), glass-grade sodium sulfate, glass-grade carbon and hematite (Portafer^{®} G63).

The starting materials obtained from Sibelco^{®} were quartz sand M32, cristobalite grit M72T, nepheline syenite (Matrix 350), Durcal low-iron dolomite (0-3 mm) and hematite (Portafer^{®} G63). The glass-grade soda ash, limestone and sodium sulfate were obtained from Stoelzle Oberglas GmbH. The glass-grade carbon was obtained from Ciner Park Glass.

The source of the starting materials for each of the reference and example glass batch compositions remained the same throughout Example 2. The only difference between the glass batch compositions of Example 2 is the relative amounts of quartz sand M32 and cristobalite grit M72T.

Table 2 shows the relative amount of each starting material that made up R3, R4, GBC3, GBC4 and GBC5, along with the ratio of starting materials quartz sand M32 to cristobalite grit M72T, and the substitution rate of quartz sand M32 with cristobalite grit M72T in each glass batch composition.

**Table 2: The starting materials for reference glass batch compositions R3, R4 and example glass batch compositions GBC3, GBC4 and GBC5. The quartz sand M32 to cristobalite grit M72T ratio, and the substitution rate of quartz sand M32 with cristobalite grit M72T, are shown following the starting materials.**

| | **AMOUNT (grams)** | | | | |
|---|---|---|---|---|---|
| **STARTING MATERIAL** | **R3** | **R4** | **GBC3** | **GBC4** | **GBC5** |
| **QUARTZ SAND M32** | 34.8 | 29.58 | 24.36 | 19.14 | 8.7 |
| **CRISTOBALITE M72T** | 0 | 5.22 | 10.44 | 15.66 | 26.1 |
| **SODA ASH** | 10.8 | 10.8 | 10.8 | 10.8 | 10.8 |
| **LIMESTONE** | 7.8 | 7.8 | 7.8 | 7.8 | 7.8 |
| **DOLOMITE** | 3.48 | 3.48 | 3.48 | 3.48 | 3.48 |
| **NEPHELINE SYENITE** | 3 | 3 | 3 | 3 | 3 |
| **SODIUM SULFATE** | 0.12 | 0.12 | 0.12 | 0.12 | 0.12 |
| **HEMATITE** | 0.02 | 0.02 | 0.02 | 0.02 | 0.02 |
| **CARBON** | 0.05 | 0.05 | 0.05 | 0.05 | 0.05 |
| | | | | | |
| **QUARTZ SAND M32 : CRISTOBALITE M72T** | | 5.67 : 1.00 | 2.33 : 1.00 | 1.22 : 1.00 | 1.00 : 3.00 |
| **SUBSTUTION OF QUARTZ SAND M32 WITH CRISTOBALITE M72T (%)** | 0 | 15 | 30 | 45 | 75 |

Glasses were formed from the glass batch compositions of Table 2 using a second glass method (outlined below).

### Second glass method

1. A Nabertherm LHT 08/17 melting furnace was pre-heated to a temperature (T).
2. The starting materials of a glass batch composition of Table 2 were mixed together then melted in a GCS100R (Pt90/Rh10) platinum crucible in the melting furnace at the temperature (T) for a time period (t).
3. The platinum crucible was removed from the melting furnace and the molten glass content of the platinum crucible was immediately quenched in water, forming an amorphous solid (a mixture of glass with undissolved crystals).

### Glass formed using the second glass method (T = 1350 °C and t = 30 minutes) and the glass batch compositions of Table 2

In one example, an amorphous solid was formed from each of glass batch compositions of Table 2. Following the second glass method, the melting furnace was pre-heated to a temperature T = 1350 °C (first step). The crucible containing the particular glass batch composition of Table 2 was inserted into the melting furnace at T = 1350 °C and the glass batch composition was melted (second step) for a time period t = 30 minutes. The molten glass was quenched according to the third step of the second glass making method, forming an amorphous solid.

The mineralogy of the amorphous solids formed after quenching was analysed by applying X-ray diffraction techniques. First, a sample was taken from the amorphous solid obtained from the third step of the second glass method. Next, ZnO was added to the glass sample (as an internal standard) and both were ground together to a powder. The powder was then measured with a Bruker D8 Advance (DaVinci Design) X-ray powder diffractometer. Table 3 shows the results of the X-ray diffraction analysis obtained from mineral qualification and Rietveld quantification using Bruker software Topas and Diffrac.EVA.

**Table 3: Crystal phases present in amorphous solid formed after melting each glass batch composition of Table 2 at T = 1350 °C for t = 30 minutes. The ratio of the starting materials quartz sand M32 and cristobalite grit M72T in each glass batch composition is shown for reference.**

| **CRYSTAL PHASE/ WEIGHT %** | **R3** | **R4** | **GBC3** | **GBC4** | **GBC5** |
|---|---|---|---|---|---|
| **SILICA POLYMORPHS** | 3.5 | 3.4 | 2 | 1.6 | 1 |
| **AMORPHOUS** | 96.5 | 96.6 | 97.4 | 98.4 | 99 |
| | | | | | |
| **QUARTZ SAND M32 : CRISTOBALITE M72T** | | 5.67 : 1.00 | 2.33 : 1.00 | 1.22: 1.00 | 1.00 : 3.00 |

In Table 3, the GBC3 sample had a small contamination (0.6 weight %), hence why the sum of the components is slightly less than 100.

Table 3 shows that the amorphous solid (comprising glasses) formed from the example glass batch compositions having a ratio of quartz sand to cristobalite of from 3:1 to 1:3 (i.e. GBC3, GBC4 and GBC5) have a higher proportion of amorphous phase glass when compared to the reference glass batch with only quartz sand (R3), and compared to the other reference glass batches (R4). Therefore, the example glass batches demonstrate that a ratio of quartz sand to cristobalite of from 3:1 to 1:3 leads to a higher conversion degree of starting materials to glass, and an improvement in primary melt quality.

A higher conversion degree indicates a faster conversion rate of glass batch materials to amorphous glass. Therefore, a ratio of quartz sand to cristobalite of from 3:1 to 1:3 reduces the minimal residence time required during the glass production process for a full conversion of a glass batch to a glass. Alternatively, if the residence time is not changed then the results of Table 3 suggest that a ratio of quartz sand to cristobalite of from 3:1 to 1:3 would allow for a reduction in the glass furnace temperature required for a full conversion of the glass batch to a glass.

### Glasses formed using the second glass method (T = 1250 °C and t = 1 hour or 2 hours) and the glass batch compositions of Table 2

In other examples, glass was formed from each of glass batch compositions R4, GBC3 and GBC4. Following the second glass method, the melting furnace was pre-heated to a temperature T = 1250 °C (first step). The crucible containing the glass batch was inserted into the melting furnace at T = 1250 °C and the glass batch was melted (second step) for a time period of either t = 1 hour or t = 2 hours. The molten glass was quenched (third step), forming an amorphous solid.

The mineralogy of the amorphous solids formed after quenching was analysed by applying X-ray diffraction techniques. First, a glass sample was taken from the amorphous solid obtained from the third step of the second glass method. Next, ZnO was added to the glass sample (as an internal standard) and both were ground together to a powder. The powder was then measured with a Bruker D8 Advance (DaVinci Design) X-ray powder diffractometer. Table 4 shows the results of the X-ray diffraction analysis obtained from mineral qualification and Rietveld quantification using Bruker software Topas and Diffrac.EVA.

**Table 4: Crystal phases present in glass formed after melting glass batch compositions R4, GBC3 and GBC4 at T = 1250 °C for t = 1 hour or t = 2 hours. The ratio of the starting materials quartz sand M32 and cristobalite grit M72T in each glass batch composition is shown for reference.**

| | **R4** | | **GBC3** | | **GBC4** | |
|---|---|---|---|---|---|---|
| **CRYSTAL PHASE/ WEIGHT %** | **1 h** | **2 h** | **1 h** | **2 h** | **1 h** | **2 h** |
| **SILICA POLYMORPHS** | 2.5 | 2.3 | 2.4 | 1.1 | 1.9 | 1.0 |
| **NEPHELINE** | 0.8 | Nil | Nil | Nil | 0.5 | Nil |
| **AMORPHOUS** | 96.7 | 97.7 | 97.6 | 98.9 | 97.6 | 99.0 |
| | | | | | | |
| **QUARTZ SAND M32** : **CRISTOBALITE M72T** | 5.67 : 1.00 | | 2.33 : 1.00 | | 1.22 : 1.00 | |

The results in Table 3 and Table 4 show that silica polymorphs, for example quartz and cristobalite, are the typical remnant crystal phase within the molten glass and are the last starting material to dissolve.

The samples of GBC3 and GBC4 again show a notable improvement in primary melt quality compared to the reference batches, and a longer residence time increases the conversion degree of starting materials to amorphous glass in all cases.

A higher conversion degree of glass batch materials to glass indicates a faster conversion rate, which translates into shorter minimal residence times required for producing glass or enabling a reduction in glass furnace temperatures, while maintaining a full conversion to glass during the residence time in the furnace. The results also show that the substitution of quartz sand M32 by cristobalite grit M72T as glass batch composition starting materials leads to more rapid melting of the glass batch and hence a shorter 'batch-free-time'. In other words, the inventors surprisingly discovered that combining quartz sand and cristobalite within the claimed ratios leads to the beneficial formation of glass with energy savings compared to conventional glass batches.

### Glasses formed using a third glass making method and the glass batch compositions of Table 2

In another example, a glass was formed from each of the glass batch compositions from Table 2 using a third glass method (outlined below):

### Third glass method

1. A Nabertherm LHT 08/17 melting furnace was pre-heated to 1350°C.
2. An Nabertherm N 7/H annealing furnace was pre-heated to 580 °C.
3. The starting materials of a glass batch composition of Table 2 were mixed together then melted in a GCS100R (Pt90/Rh10) platinum crucible in the melting furnace at 1350°C and for 30 minutes.
4. The platinum crucible was removed from the melting furnace and placed in the annealing furnace at 580 °C for four hours.
5. The glass formed was cooled to room temperature over a period of at least four hours.

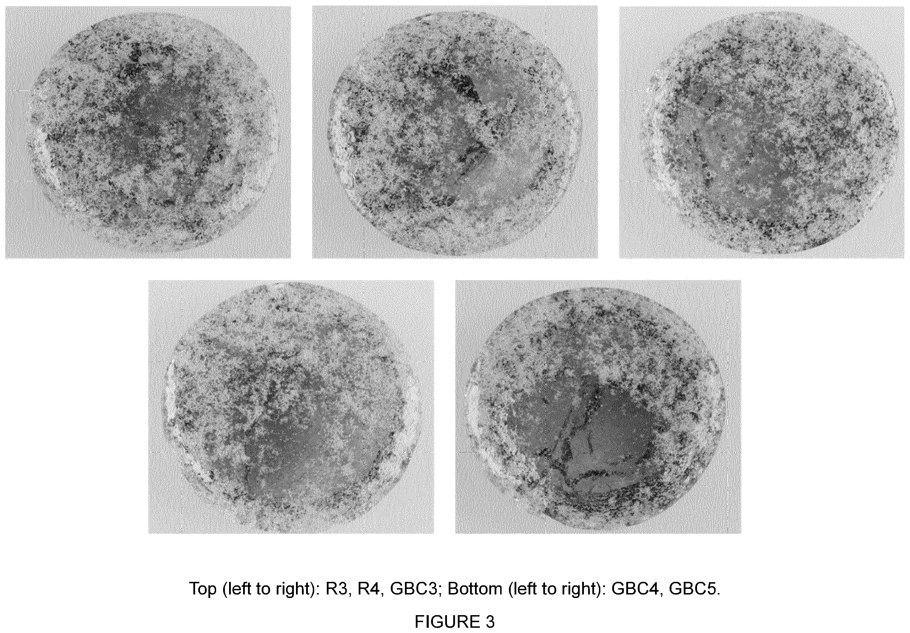

A top view of each of the glasses formed was imaged using a digital camera (Canon EOS750D with an illumination set-up Kaiser Prolite Basic 2). The resulting images are shown in Figure 3.

The images of Figure 3 show complementary results to the results of the X-ray diffraction analysis set out in Tables 3 and 4. Figure 3 shows that a ratio of quartz sand to cristobalite of from 3:1 to 1:3 increased the conversion degree compared to a glass made from a reference glass batch composition and with an identical residence time and identical temperature.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A glass batch composition comprising:
quartz sand; and,
cristobalite,
wherein the glass batch composition has a weight ratio of quartz sand to cristobalite of from 3:1 to 1:3.

2. The glass batch composition of claim 1, wherein the glass batch composition has a weight ratio of quartz sand to cristobalite of: from 2.75:1 to 1:2.75; or, from 2.5:1 to 1:2.5; or, from 2.25:1 to 1:2.25; or, from 2:1 to 1:2.

3. The glass batch composition of claim 1 or claim 2,
wherein the glass batch composition comprises from 10 to 75 weight % quartz sand; and/or,
wherein the glass batch composition comprises from 10 to 75 weight % cristobalite.

4. The glass batch composition of any one of claims 1 to 3, wherein the quartz sand and the cristobalite make up from 10 to 70 weight % of the glass batch composition.

5. The glass batch composition of any one of claims 1 to 4, wherein the quartz sand and the cristobalite are mixed; and/or,
wherein the glass batch is a loose batch.

6. The glass batch composition of any one of claims 1 to 5, wherein the glass batch composition comprises:
from 10 weight % to 70 weight % cristobalite; or,
from 10 weight % to 45 weight % cristobalite; or,
wherein the glass batch composition comprises:
10.5 weight % cristobalite, plus or minus 5 weight %; or,
21.2 weight % cristobalite, plus or minus 5 weight %; or,
40.1 weight % cristobalite, plus or minus 5 weight %.

7. The glass batch composition of any one of claims 1 to 6, wherein the cristobalite:
has a particle size distribution with a minimum particle size of 63 µm and a maximum particle size of 1000 µm; or,
has a particle size distribution with a maximum particle size of 45 µm; or,
has a particle size distribution with a maximum particle size of 100 µm; or,
has a particle size distribution with a maximum particle size of 200 µm.

8. The glass batch composition of any one of claims 1 to 7, wherein the quartz sand:
has a particle size distribution with a minimum particle size of 63 µm and a maximum particle size of 1000 µm; or,
has a particle size distribution with a maximum particle size of 50 µm.

9. The glass batch composition of any one of claims 1 to 8, wherein the glass batch is for forming a container glass, float glass, borosilicate glass, glass fiber, fiber glass or glass wool.

10. The glass batch composition of any one of claims 1 to 9, wherein:
the quartz sand comprises, or consists of, quartz M32 (from Sibelco^{®}) or quartz M300 (from Sibelco^{®}) or quartz M400 (from Sibelco^{®}) or quartz F32 (from Quarzwerke) or Sikron SF300 (from Quarzwerke); and/or,
wherein the cristobalite comprises, or consists of, SIBELITE^{®} M72 (from Sibelco^{®}) or SIBELITE^{®} M72T (from Sibelco^{®}) or SIBELITE^{®} M0010 (from Sibelco^{®}) or SIBELITE^{®} M3000 (from Sibelco^{®}) or Sikron SF3000 (from Quarzwerke).

11. The glass batch composition of any one of claims 1 to 10, wherein the glass batch composition further comprises one or more of:
cullet, soda ash, limestone, lime, dolomite, feldspar, nepheline syenite, nepheline, kaolin, anorthosite, boric acid, colemanite, sodium sulfate and/or borax.

12. The glass batch composition of any one of claims 1 to 11, wherein the glass batch composition comprises:
from 1 weight % to 58 weight % quartz sand; and/or,
from 1 weight % to 58 weight % cristobalite; and/or,
from 0 weight % to 98 weight % cullet.

13. A method of forming glass, the method comprising:
introducing the glass batch composition of any one of claims 1 to 12 into a glass furnace;
heating the glass batch composition to produce a glass solution; and,
cooling the glass solution to make a glass.

14. The method of claim 13, wherein the glass produced:
is a float glass comprising:
from 67 weight % to 77 weight % SiO₂; and,
from 10 weight % to 20 weight % Na₂O; and,
from 3 weight % to 15 weight % CaO; wherein the balance is:
from 0 weight % to 8 weight % MgO; and/or,
from 0 weight % to 5 weight % Al₂O₃; and/or,
from 0 weight % to 5 weight % K₂O; and/or,
and optionally other minor elements; or,
is a fiber glass comprising:
from 52 weight % to 62 weight % SiO₂; and,
from 12 weight % to 17 weight % Al₂O₃; and,
from 14 weight % to 25 weight % CaO; wherein the balance is:
from 0 weight % to 9 weight % MgO; and/or,
from 0 weight % to 13 weight % B₂O₃; and/or,
from 0 weight % to 3 weight % Na₂O; and/or,
and optionally other minor elements.

15. Use of a glass batch composition according to any one of claims 1 to 12, to form:
a float glass comprising:
from 67 weight % to 77 weight % SiO₂; and,
from 10 weight % to 20 weight % Na₂O; and,
from 3 weight % to 15 weight % CaO; wherein the balance is:
from 0 weight % to 8 weight % MgO; and/or,
from 0 weight % to 5 weight % Al₂O₃; and/or,
from 0 weight % to 5 weight % K₂O; and/or,
and optionally other minor elements; or,
a fiber glass comprising:
from 52 weight % to 62 weight % SiO₂; and,
from 12 weight % to 17 weight % Al₂O₃; and,
from 14 weight % to 25 weight % CaO; wherein the balance is:
from 0 weight % to 9 weight % MgO; and/or,
from 0 weight % to 13 weight % B₂O₃; and/or,
from 0 weight % to 3 weight % Na₂O; and/or, and optionally other minor elements.
